# EUROPEAN PATENT APPLICATION

(11) **EP 4 821 417 A1**
(43) Date of publication of application: **14.10.2026**
(21) Application number: 26156869.5
(22) Date of filing: 06.02.2026
(51) Int. Cl.: A47J 43/07

(54) **BLADE ASSEMBLY FOR A BLENDER**

(30) Priority: 08.04.2025 US 202563785272 P
(71) Applicant: Starbucks Corporation, Seattle, WA 98134 (US)
(72) Inventor: HOUSE, Matthew D, Seattle, 98134 (US); LANE, David M, Seattle, 98134 (US)
(74) Representative: Gill Jennings & Every LLP

(57) **Abstract**

A blade assembly of the present disclosure can include an inner central hub that is substantially perpendicular to a central axis of the blade assembly. The central axis can extend through a center of the inner central hub. The blade assembly can also include an outer circular frame that is substantially perpendicular to the central axis and positioned coaxially around the inner central hub. The outer circular frame is spaced apart from the inner central hub. The outer circular frame may have a thickness of at least 10 millimeters (mm). The outer circular frame can have apertures through a circumference of the outer circular frame. The blade assembly can also include at least one radial structural support extending outwardly from the inner central hub to the outer circular frame, where the at least one radial structural support couples the inner central hub to the outer circular frame.

## Description

### Cross-Reference To Related Applications

This claims the benefit of priority under 35 U.S.C. § 119(e) to U.S. Provisional Patent Application No. 63/785,272, filed April 8, 2025 and titled "BLADE ASSEMBLY FOR A BLENDER".

### Technical Field

The present disclosure relates generally to blender components. More specifically, but not by way of limitation, this disclosure relates to a blade assembly for a blender.

### Background

Blenders are commonly used to mix, blend, or froth liquids for culinary applications. Traditional blade designs focus on cutting or chopping ingredients.

### Summary

According to the present invention, there is provided a blade assembly for use in a blender, and a corresponding method and system, as defined in the appended claims.

Thus, one example of the present disclosure can include a blade assembly for use in a blender. The blade assembly can include an inner central hub that is substantially perpendicular to a central axis of the blade assembly, wherein the central axis extends through a center of the inner central hub. The blade assembly can also include an outer circular frame that is substantially perpendicular to the central axis and positioned coaxially around the inner central hub, wherein the outer circular frame is spaced apart from the inner central hub and has a thickness of at least 10 millimeters (mm), and wherein the outer circular frame has apertures around a circumference of the outer circular frame, the apertures being slanted in a direction of rotation of the blade assembly. The blade assembly can also include at least one radial structural support extending outwardly from the inner central hub to the outer circular frame, wherein the at least one radial structural support couples the inner central hub to the outer circular frame. Gap regions can be disposed in the blade assembly between the at least one radial structural support, the inner central hub, and the outer circular frame.

Another example of the present disclosure can include a method performed at a physical location. The method can include receiving a blade assembly for a blender. The blade assembly can include an inner central hub that is substantially perpendicular to a central axis of the blade assembly, wherein the central axis extends through a center of the inner central hub. The blade assembly can also include an outer circular frame that is substantially perpendicular to the central axis and positioned coaxially around the inner central hub, wherein the outer circular frame is spaced apart from the inner central hub and has a thickness of at least 10 millimeters (mm), and wherein the outer circular frame has apertures around a circumference of the outer circular frame. The blade assembly can also include at least one radial structural support extending outwardly from the inner central hub to the outer circular frame, wherein the at least one radial structural support couples the inner central hub to the outer circular frame. The method can also include receiving the blender, coupling the blade assembly to a motor shaft inside a container of the blender, adding a liquid to the container, and activating the blender, which causes the blade assembly to rotate in the liquid and generate a foam. The method can further include pouring the foam onto a beverage and providing the beverage to a recipient.

Still another example of the present disclosure can include a system. The system can include a blender including a liquid container and a motor, the motor being operable to rotate a shaft inside the container. The system can also include a blade assembly configured to be removably coupled to the shaft and rotate with the shaft inside the container. The blade assembly can include an inner central hub that is substantially perpendicular to a central axis of the blade assembly, wherein the central axis extends through a center of the inner central hub. The blade assembly can also include an outer circular frame that is substantially perpendicular to the central axis and positioned coaxially around the inner central hub, wherein the outer circular frame is spaced apart from the inner central hub and has a thickness of at least 10 millimeters (mm), and wherein the outer circular frame has apertures around a circumference of the outer circular frame. The blade assembly can further include at least one radial structural support extending outwardly from the inner central hub to the outer circular frame, wherein the at least one radial structural support couples the inner central hub to the outer circular frame.

Yet another example of the present disclosure includes a blade assembly for use in a blender. The blade assembly may comprise: an inner central hub, wherein a central axis of the blade assembly extends through a center of the inner central hub; an outer circular frame, wherein the outer circular frame is tapered or curved in shape between a first two-dimensional plane and a second two-dimensional plane, wherein the first two-dimensional plane and the second two-dimensional plane are both substantially perpendicular to the central axis, and wherein the outer circular frame has apertures around a circumference of the outer circular frame; and at least one radial structural support extending outwardly from the inner central hub to the outer circular frame, wherein the at least one radial structural support couples the inner central hub to the outer circular frame; wherein gap regions are disposed in the blade assembly between the at least one radial structural support, the inner central hub, and the outer circular frame; and wherein the blade assembly is configured for blending fluid in the blender.

Still another example of the present disclosure includes a system comprising a blender including a liquid container and a motor, the motor being operable to rotate a shaft inside the container; and a blade assembly configured to be removably coupled to the shaft and rotate with the shaft inside the container. The blade assembly may comprise an inner central hub, wherein a central axis of the blade assembly extends through a center of the inner central hub; an outer circular frame that is tapered or curved in shape between a first two-dimensional plane and a second two-dimensional plane, wherein the first two-dimensional plane and the second two-dimensional plane are both substantially perpendicular to the central axis, and wherein the outer circular frame has apertures around a circumference of the outer circular frame; and at least one radial structural support extending outwardly from the inner central hub to the outer circular frame, wherein the at least one radial structural support couples the inner central hub to the outer circular frame.

In a preferred embodiment, a blade assembly for use in a blender comprises: an inner central hub, wherein a central axis of the blade assembly extends through a center of the inner central hub; an outer circular frame, wherein the outer circular frame is tapered or curved in shape between a first two-dimensional plane and a second two-dimensional plane, wherein the first two-dimensional plane and the second two-dimensional plane are both substantially perpendicular to the central axis, and wherein the outer circular frame has apertures around a circumference of the outer circular frame; and at least one radial structural support extending outwardly from the inner central hub to the outer circular frame, wherein the at least one radial structural support couples the inner central hub to the outer circular frame; wherein gap regions are disposed in the blade assembly between the at least one radial structural support, the inner central hub, and the outer circular frame; and wherein the blade assembly is configured for blending fluid in the blender.

In a preferred embodiment, a method performed at a physical location comprises: receiving a blade assembly for a blender, the blade assembly including; an inner central hub, wherein a central axis of the blade assembly extends through a center of the inner central hub; an outer circular frame that is tapered or curved in shape between a first two-dimensional plane and a second two-dimensional plane, wherein the first two-dimensional plane and the second two-dimensional plane are both substantially perpendicular to the central axis, and wherein the outer circular frame has apertures around a circumference of the outer circular frame; and at least one radial structural support extending outwardly from the inner central hub to the outer circular frame, wherein the at least one radial structural support couples the inner central hub to the outer circular frame; receiving the blender; coupling the blade assembly to a motor shaft inside a container of the blender; adding a liquid to the container; activating the blender, which causes the blade assembly to rotate in the liquid and generate a foam; pouring the foam onto a beverage; and providing the beverage to a recipient.

In a preferred embodiment, a system comprises: a blender including a liquid container and a motor, the motor being operable to rotate a shaft inside the container; and a blade assembly configured to be removably coupled to the shaft and rotate with the shaft inside the container, the blade assembly comprising: an inner central hub, wherein a central axis of the blade assembly extends through a center of the inner central hub; an outer circular frame that is tapered or curved in shape between a first two-dimensional plane and a second two-dimensional plane, wherein the first two-dimensional plane and the second two-dimensional plane are both substantially perpendicular to the central axis, and wherein the outer circular frame has apertures around a circumference of the outer circular frame; and at least one radial structural support extending outwardly from the inner central hub to the outer circular frame, wherein the at least one radial structural support couples the inner central hub to the outer circular frame.

The outer circular frame may include a first outer circumference and a second outer circumference, and the first outer circumference may have a smaller diameter than the second outer circumference. The outer circular frame may be tapered or curved.

The apertures may each have a first end that is closer to the central axis than a second end, such that the apertures are slanted relative to the central axis, preferably in addition to the apertures being slanted in a direction of rotation.

The first outer circumference of the outer circular frame may define the first two-dimensional plane, the second outer circumference of the outer circular frame may define the second two-dimensional plane, the first two-dimensional plane may be substantially parallel to the second two-dimensional plane, and a vertical distance between the first two-dimensional plane and the second two-dimensional plane may define at least part of a thickness of the blade assembly.

A first face of the inner central hub may lie in the first two-dimensional plane, and a second face of the inner central hub may lie vertically above the second two-dimensional plane, such that the second face is recessed relative to the second two-dimensional plane, the second face being opposite the first face.

Additionally, or alternatively, a first face of the at least one radial structural support may lie in the first two-dimensional plane, and a second face of the at least one radial structural support may lie vertically above the second two-dimensional plane, such that the second face is recessed relative to the second two-dimensional plane, the second face being opposite the first face.

The apertures may be slanted in a direction of rotation at an angle of between 15 degrees and 50 degrees. The apertures may be spaced equidistantly around the circumference of the outer circular frame. The apertures may be oval in shape.

The at least one radial structural support may comprise multiple radial structural supports that are spaced equidistantly around the inner central hub.

The inner central hub may include an aperture configured to securely attach the blade assembly to a motor shaft of the blender.

The blade assembly may be symmetrical around the central axis.

A thickness of the outer circular frame is preferably between 5 mm and 40 mm.

It will be understood that any of the features described above or herein may be incorporated into the apparatus, method and system claimed herein.

### Brief Description of the Drawings

One or more examples of the invention will now be described, purely by way of example, with reference to the accompanying figures, in which:
FIG. 1A shows a perspective view of an example of the blade assembly according to some aspects of the present disclosure.
FIG. 1B shows a top-down view of the blade assembly of FIG. 1A according to some aspects of the present disclosure.
FIG. 1C shows a bottom view of the blade assembly of FIG. 1A according to some aspects of the present disclosure.
FIG. 1D shows a cross-sectional side view of the blade assembly of FIG. 1A according to some aspects of the present disclosure.
FIG. 2 shows a cross-sectional side view of an example of a blender containing the blade assembly according to some aspects of the present disclosure.
FIG. 3 shows a flowchart of an example of a process for using the blade assembly according to some aspects of the present disclosure.
FIG. 4A shows a perspective view of an example of the blade assembly according to some aspects of the present disclosure.
FIG. 4B shows a top-down view of the blade assembly of FIG. 4A according to some aspects of the present disclosure.
FIG. 4C shows a bottom view of the blade assembly of FIG. 4A according to some aspects of the present disclosure.
FIG. 4D shows a side view of the blade assembly of FIG. 4A according to some aspects of the present disclosure.

### Detailed Description

In the food service industry, blenders can be used to create foam toppings for beverages by aerating a liquid, such as milk or non-dairy alternatives. The process involves rotating a thin circular disc within the blender to agitate the liquid and generate foam. These circular discs are generally flat and thin (e.g., 1 mm thick or less), making them essentially two-dimensional structures. When the liquid is kept at or below 100°F throughout the foaming process, the resulting foam is referred to as "cold foam."

A significant limitation of existing blenders arises from the positioning of the thin circular disc, which normally must be spaced at least a certain minimum distance from the bottom of the blender's container to satisfy cleaning requirements. For example, during cleaning, the thin circular disc often remains attached to a motor shaft at the bottom of the container to save time. Because the disc remains attached to the container during cleaning, to comply with regulatory requirements, the disk may need to be spaced at least 20 millimeters (mm) from the bottom of the container. This distance allows cleaning fluid to circulate behind the disk and prevent bacteria growth. But due to this spacing, during operation, there is a minimum amount of liquid that must be added to the container to ensure the thin circular disc contacts and aerates the liquid effectively. For example, enough liquid may need to be added to the container to raise the fluid level to the 20 mm height of the disc. If the fluid level is less than 20 mm in height, the disc cannot contact and aerate the liquid. Consequently, users often add more of the liquid than is needed for the desired amount of foam, leading to excess foam. For example, users may add 100 milliliters (ml) of liquid to the container so that the fluid level meets the thin circular disk, when they really only need 40 ml of liquid to create the desired amount of foam for a particular beverage. Because the excess foam can quickly lose its structure, it is often discarded. This inefficiency results in unnecessary waste, particularly in high-volume operations where thousands of beverages of varying sizes may be created daily.

Some examples of the present disclosure can overcome one or more of the abovementioned problems by providing a blade assembly that is effective to generate foam with less liquid in the blender. For example, the blade assembly may be able to create cold foam with as little as 20 ml of liquid in the container, whereas the thin circular disk described above may need 3-5 times as much liquid depending on the required spacing from the bottom of the container. The blade assembly can be quickly retrofitted onto any suitable blender, allowing for a wide variety of applications in the culinary, chemical, and pharmaceutical fields. For example, the blade assembly can be easily attached to a blender's driveshaft by connecting its central hub to the driveshaft via a bolt or other attachment mechanism.

In some examples, the blade assembly features an open hub-and-spoke design that includes a ring-shaped outer circular frame, a central hub, and radial structural supports connecting the frame to the hub. The open design facilitates easy cleaning, eliminating the need for the blade assembly to maintain a significant spacing from the bottom of the blender container. Because the blade assembly is no longer subject to those spacing constraints, the outer circular frame can have significant depth, for example exceeding 20 mm, unlike conventional thin circular discs. This increased depth enables the outer circular frame to effectively contact and aerate lower liquid levels in the container. For example, the bottom of the outer circular frame can reach liquid levels as low as 20 ml, enabling foam generation with minimal liquid. Because the blase assembly is more effective in lower liquid volumes than conventional designs, the blade assembly can reduce the waste described above.

As noted above, the outer circular frame can have significant depth which can form a sidewall of the blade assembly. In some examples, the sidewall can include apertures designed to enhance foam production. The apertures may be circular or oval in shape. The apertures can be slanted relative to the blade assembly's central axis. This slant direction can align with the direction of rotation, which may optimize aeration. The apertures can also aid in the cleaning process by allowing cleaning fluid to more easily circulate through and behind the blade assembly.

This introduction is provided to discuss the general subject matter described herein and is not intended to limit the scope of the disclosed concepts. The following sections describe various additional features and examples with reference to the drawings, but also should not be used to limit the present disclosure.

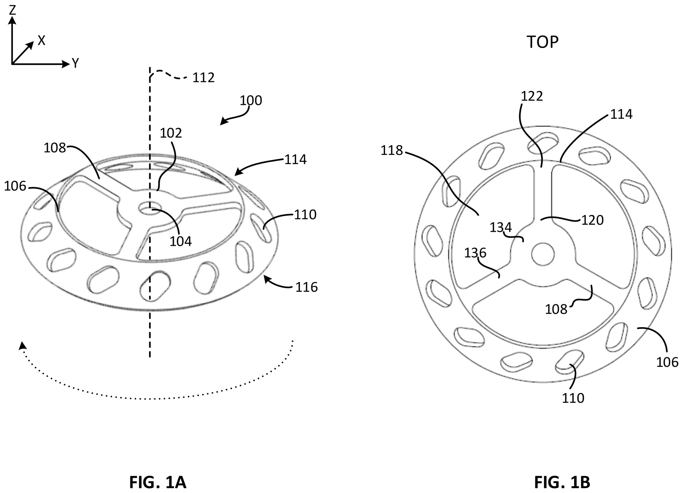

FIGS. 1A-D show an example of a blade assembly 100 according to some aspects of the present disclosure. As shown, the blade assembly 100 can be circular in shape. The blade assembly 100 can also be symmetrical in shape around its central axis 112, which can help ensure smooth and balanced rotation.

The blade assembly 100 can include a central hub 102. The central hub 102 can be generally circular in shape. The central hub 102 can be substantially perpendicular to a central axis 112 of the blade assembly 100. As used herein, a first element is "substantially perpendicular to" a second element if the first element is exactly perpendicular to the second element or within three degrees thereof. The central hub 102 is configured to be connected to a shaft (e.g., driveshaft or rotor) of the blender's motor using any suitable attachment mechanism, such as a threaded connection. In some examples, the central hub 102 can include a central hole 104 for receiving the shaft. The shaft can be positioned through the central hole 104 and fixed in place with a nut, clamp, screw, or other coupling device.

The central hub 102 can include a first face 134 (e.g., an upper face) and a second face 130 (e.g., a lower face). The first face 134 can be opposite to the second face 130. The first face 134 is oriented away from the bottom of the blender container when the blade assembly 100 is attached to the motor shaft. The second face 130 is oriented toward the bottom of the blender container when the blade assembly 100 is attached to the motor shaft.

The central hub 102 can be coupled to one or more radial structural supports 108. The radial structural supports 108 can extend radially outwardly from the central hub 102 (e.g., in the radial direction away from the central axis 112 of the blade assembly 100). The radial structural supports 108 can be flat and broad to minimize turbulence while maintaining structural integrity. In some examples, the radial structural supports 108 can be substantially perpendicular to the central axis 112. The radial structural supports 108 can be positioned around the circumference of the central hub 102. In some examples, the radial structural supports 108 may be evenly spaced apart from one another. For instance, if the blade assembly 100 includes three radial structural supports 108, the radial structural supports may be spaced 120 degrees apart from each other around the circumference of the central hub 102.

The radial structural supports 108 can each have a proximal end 120 and a distal end 122. Their proximal ends 120 can be coupled to the central hub 102 and their distal ends 122 can be coupled to a circular outer frame 106. The radial structural supports 108 can each include a first face 136 (e.g., an upper face) and a second face 132 (e.g., a lower face). The first face 136 can be opposite to the second face 132. The first face 136 is configured to face away from the bottom of the blender container when the blade assembly 100 is attached to the motor shaft. The second face 132 is configured to face toward the bottom of the blender container when the blade assembly 100 is attached to the motor shaft.

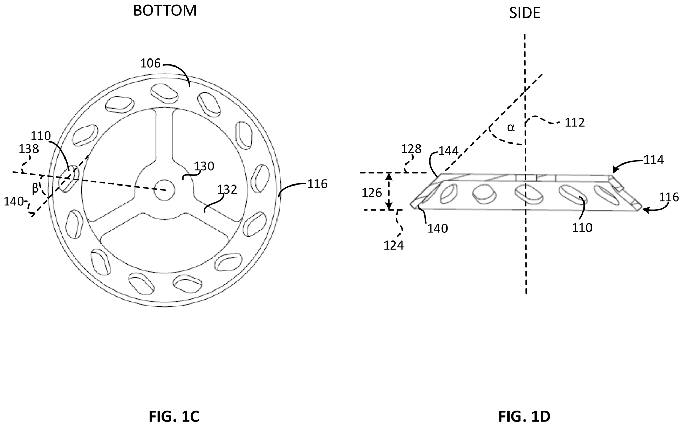

The circular outer frame 106 can have a first outer circumference 114 (e.g., upper outer circumference) near its top and a second outer circumference 116 (e.g., a lower outer circumference) near its base. The portion of the circular outer frame 106 extending from the second outer circumference 116 to the first outer circumference 114 can be considered a sidewall of the blade assembly 100. In this example, the second outer circumference 116 has a greater diameter than the first outer circumference 114, such that the sidewall has an inwardly tapered profile in the direction from the second outer circumference 116 to the first outer circumference 114. This can yield a cross-sectional side shape that is trapezoidal, as shown in FIG. 1D, with the shorter edge of the trapezoid corresponding to the top of the blade assembly 100 and the longer edge of the trapezoid corresponding to the bottom (base) of the blade assembly 100. The sidewall may be tapered at an angle (e.g., shown as "α" in FIG. 1D) in the range of 15° to 55° relative to the central axis 112. But in other examples, the second outer circumference 116 may have the same diameter as the first outer circumference 114, such that the sidewall is parallel to the central axis 112. This can yield a cross-sectional side shape that is rectangular. And in still other examples, the second outer circumference 116 may have a smaller diameter than the first outer circumference 114, such that the sidewall has an outwardly tapered profile in the direction from the second outer circumference 116 to the first end 114. This can yield a cross-sectional side shape that is trapezoidal, with the shorter edge of the trapezoid corresponding to the bottom of the blade assembly 100 and the longer edge of the trapezoid corresponding to the top of the blade assembly 100. As shown in FIG. 1D, the sidewall can have an inner face 140 and an outer face 144, where the outer face 144 is opposite to the inner face 140.

As noted above, the radial structural supports 108 can be coupled to the circular outer frame 106. For example, the radial structural supports 108 can be coupled to the first outer circumference 114 (e.g., top end) of the circular outer frame 106. As shown in FIG. 1D, the first outer circumference 114 of the circular outer frame 106, the first face 134 of the central hub 102, and/or the first faces 136 of the radial structural supports 108 may lie in a first two-dimensional plane 128 that is substantially perpendicular to the central axis 112. The rest of the circular outer frame 106 can extend downwardly from the first plane 128 (e.g., in the axial direction). The second outer circumference 116 of the circular outer frame 106 can lie in a second two-dimensional plane 124 that is substantially perpendicular to the central axis 112. The first plane 128 can be substantially parallel to the second plane 124. As used herein, a first element is "substantially parallel to" a second element if the first element is exactly parallel to the second element or within three degrees thereof. The vertical distance 126 between the first plane 128 and the second plane 124 can define the overall thickness of the blade assembly 100. In some examples, this overall thickness (e.g., vertical distance) may be 15-35 mm.

The central hub 102 and/or the radial structural supports 108 may be relatively thin in comparison to the circular outer frame 106. For example, the central hub 102 and/or radial structural supports 108 may be 5-10 mm in thickness, while the circular outer frame 106 may be 2-4 times that thickness. As indicated above, the "thickness" refers to the dimension in the direction of the central axis 112 (e.g., the Z-direction). The central hub 102 and/or radial structural supports 108 may be designed to minimize material usage and thickness, while still maintaining the structural integrity of the blade assembly 100. This may render the design cheaper and easier to manufacture.

As shown in FIG. 1B, the blade assembly 100 can have one or more gap regions 118 (e.g., openings) between the radial structural supports 108, the central hub 102, and the circular outer frame 106. The gap regions 118 can allow for cleaning fluid to easily circulate through and behind the blade assembly 100, so that the blade assembly 100 can be easily cleaned even if it remains inside the blender's container (e.g., attached to the motor shaft) during the cleaning process.

The circular outer frame 106 can include one or more apertures 110 (perforations). The apertures 110 can be positioned around the circumference of the circular outer frame 106. In this context, the apertures 110 can be said to extend through the sidewall of the blade assembly 100. In some examples, the apertures 110 may be evenly spaced apart (equidistant) around the circumference of the circular outer frame 106. The apertures 110 can be oval in shape, which can improve the blade assembly's 100 ability to generate foam. Alternatively, the apertures 110 may be circles or other shapes.

If the circular outer frame 106 is slanted relative to (toward or away from) the central axis 112, as discussed above, the apertures 110 can also be slanted relative to the central axis 112. For example, as shown in FIG. 1D, the bottom ends of the apertures 110 can be farther from the central axis 112 than the top ends of the apertures 110. In this arrangement, the apertures 110 are slanted toward the central axis 112. As one particular example, if the circular outer frame 106 is slanted at an angle in the range of 15° to 45° toward the central axis 112, the apertures 110 can also be slanted at the same angle toward the central axis 112. On the other hand, if the circular outer frame 106 is not slanted toward or away from the central axis 112, as discussed above, the apertures 110 also may not slanted toward or away from the central axis 112. In this arrangement, the bottom ends and the top ends of the apertures 110 can be equidistant from the central axis 112.

The apertures 110 may additionally or alternatively be slanted within the circular outer frame 106. For example, as shown in FIG. 1C, a radial axis 138 can extend outward from the central hub 102 to a center of an aperture 110. The aperture 110 may be slanted within the circular outer frame 106 at an oblique angle relative to the radial axis 138. The oblique angle may be an angle in the range of 15° to 50°. For instance, the aperture 110 may have longitudinal axis 140 that is slanted relative to the radial axis 138 at the oblique angle (e.g., shown as "β" in FIG. 1C). The direction of the slant can be the same as the direction of rotation of the blade assembly 100, which can reduce turbulence. An example of this is shown in FIG. 1A, in which the direction of rotation is represented by a dotted arrow. The apertures 110 can be considered slanted in the direction of rotation when their leading edges (e.g., in the direction of rotation) are closer to the second outer circumference 116 of the circular outer frame 106 than their trailing edges. Conversely, the apertures 110 may be considered slanted away from the direction of rotation when their leading edges are closer to the first outer circumference 114 of the circular outer frame 106 than their trailing edges.

In some examples, the edges of the apertures 110 can be beveled rather than sharp. This can increase the shearing force on the liquid in the blender as it passes through the apertures, which can improve the foaming ability of the blade assembly 100. Other parts of the blade assembly 100, such as the first outer circumference 114 and second outer circumference 116, may also be beveled for safety reasons - e.g., to prevent accidental injuries.

The blade assembly 100 can be made of any suitable material or combination of materials. For example, the blade assembly 100 may include metal, plastic, or a combination thereof. In some instances, the blade assembly 100 may be manufactured as a single integral unit, for example via injection molding or 3D printing.

As the blade assembly 100 rotates in the liquid, the circular outer frame 106 can push the liquid outwardly against the inner wall of the blender's container. After forcefully impacting the inner wall of the container, the liquid can bounce back through the apertures 110 toward the central axis 112. The liquid can be sheared as it passes through the apertures 110 toward the central axis 112. This process can agitate and aerate the liquid to produce foam, such as cold foam.

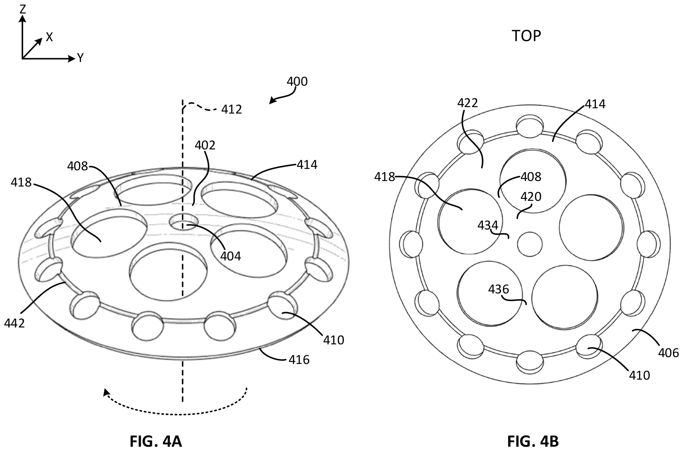

It will be appreciated that the example blade assembly 100 shown in FIGS. 1A-D is just one possible design, and other designs may also achieve the functional goals described herein. Another design is shown in FIGS. 4A-D and described in greater detail below. Thus, the present disclosure is not intended to be limited to the precise design shown in FIGS. 1A-D.

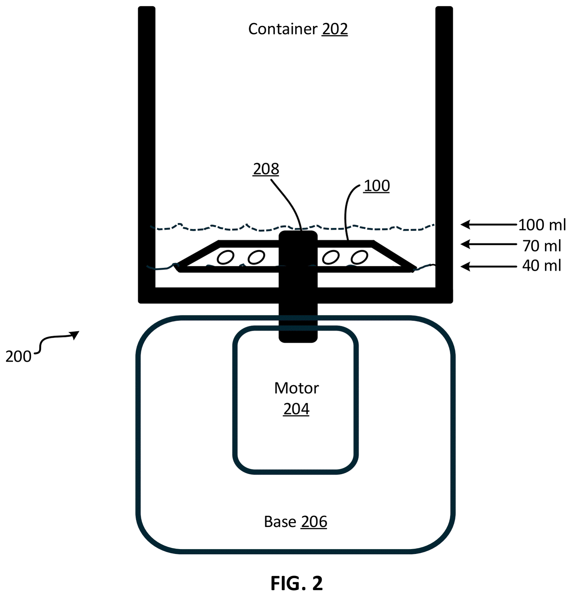

Turning now to FIG. 2, shown is an example of a blade assembly (e.g., blade assembly 100) in a container 202 of a blender 200 according to some aspects of the present disclosure. The blade assembly is coupled to a shaft 208 of a motor 204 in the base 206 of the blender 200. As shown, the blade assembly is effective at higher fluid levels (e.g., 100 ml), medium fluid levels (e.g., 70 ml), and lower fluid levels (e.g., 40 ml) because of the shape of the outer circular frame, which can extend downwardly from the central hub toward the bottom of the container 202 so that it can contact the liquid at the various fluid levels.

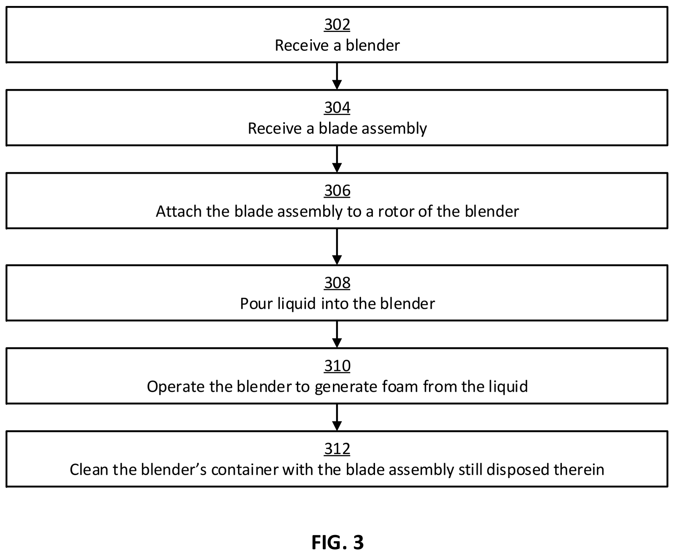

Turning now to FIG. 3, shown is a flowchart of an example of a process for using a blade assembly according to some aspects of the present disclosure. Other examples may involve more operations, fewer operations, different operations, or a different sequence of operations than is shown in FIG. 3. Some or all of the operations of FIG. 3 may be performed at a single physical location, such as a café, store, or restaurant.

In block 302, a blender is received. The blender can be received at a physical location. The blender may be provided by a first entity. The physical location may be associated with a second entity that is different from the first entity. For example, the blender may be manufactured by a first entity and provided to a café, which may be affiliated with (e.g., owned or operated by) a second entity that is different from the first entity.

In block 304, a blade assembly is received. The blade assembly can have any combination of the features described herein, such as those described with respect to FIGS. 1A-D and/or FIGS. 4A-D. The blade assembly can be received at the physical location. The blade assembly may be provided by the first entity, the second entity, or a third entity that is different from the first and second entities. For example, the blade assembly may be manufactured by a third entity and provided to the café, where the third entity is different from the second entity that is affiliated with the café.

In block 306, the blade assembly is attached to the blender. For example, a user can attach the blade assembly to a shaft of the blender via a threaded connection.

In block 308, a liquid can be poured into the blender (the blender's container). The liquid may include one liquid or a combination of liquids. Examples of the liquid may include milk, cream, almond milk, soy milk, oat milk, coconut milk, or other milk alternatives.

In block 310, the blender can be operated to generate foam from the liquid. For example, a user can activate the blender which causes the motor to rotate the shaft. The shaft, in turn, can rotate the attached blade assembly to convert the liquid into foam. The foam may be poured onto a beverage (e.g., as a topper), which can ultimately be provided to a customer at the physical location.

In block 312, the blender's container can be cleaned while the blade assembly is still disposed therein. For example, the container can be disconnected from the blender's base. When the container is disconnected from the base, the portion of the motor shaft to which the blade assembly is attached may remain inside the container. The container, with the blade assembly still disposed therein, can then be inserted into a dishwasher, sink, or other cleaning apparatus. Cleaning fluid can be circulated around and through the container and blade assembly (via its gaps and apertures) to clean the container and/or blade assembly.

FIGS. 4A-D show an example of a blade assembly 400 according to some aspects of the present disclosure. As shown, the blade assembly 400 can be circular in shape along the horizontal axes (X-axis and Y-axis) and domed in shape along the vertical axis (Z-axis). The blade assembly 400 can also be symmetrical in shape around its central axis 412, which can help ensure smooth and balanced rotation.

The blade assembly 400 can include a central hub 402. The central hub 402 can be generally circular in shape along the horizontal axes and may be slightly domed along the vertical axis. At its center point, the central hub 402 can be substantially perpendicular to a central axis 412 of the blade assembly 400. The central hub 102 is configured to be connected to a shaft (e.g., driveshaft or rotor) of the blender's motor using any suitable attachment mechanism, such as a threaded connection. In some examples, the central hub 402 can include a central hole 404 for receiving the shaft. The shaft can be positioned through the central hole 404 and fixed in place with a nut, clamp, screw, or other coupling device.

The central hub 402 can include a first face 434 (e.g., an upper face) and a second face 430 (e.g., a lower face). The first face 434 can be opposite to the second face 430. The first face 434 is oriented away from the bottom of the blender container when the blade assembly 400 is attached to the motor shaft. The second face 430 is oriented toward the bottom of the blender container when the blade assembly 400 is attached to the motor shaft. The first face 434 may have a convex shape and the second face 430 may have a concave shape.

The central hub 402 can be coupled to one or more radial structural supports 408. The radial structural supports 408 can extend radially outwardly from the central hub 402 (e.g., in the radial direction away from the central axis 412 of the blade assembly 400). The radial structural supports 408 can be curved to at least partially define the domed shape of the blade assembly 400. The radial structural supports 408 can be broad to minimize turbulence while maintaining structural integrity. The radial structural supports 408 can be positioned around the circumference of the central hub 402. In some examples, the radial structural supports 408 may be evenly spaced apart from one another. For instance, if the blade assembly 400 includes five radial structural supports 408, the radial structural supports may be spaced 72 degrees apart from each other around the circumference of the central hub 402.

The radial structural supports 408 can each have a proximal end 420 and a distal end 422. Their proximal ends 420 can be coupled to the central hub 402 and their distal ends 422 can be coupled to a circular outer frame 406. The radial structural supports 408 can each include a first face 436 (e.g., an upper face) and a second face 432 (e.g., a lower face). The first face 436 can be opposite to the second face 432. The first face 436 is configured to face away from the bottom of the blender container when the blade assembly 400 is attached to the motor shaft. The second face 432 is configured to face toward the bottom of the blender container when the blade assembly 400 is attached to the motor shaft. The first face 436 may have a convex shape and the second face 432 may have a concave shape.

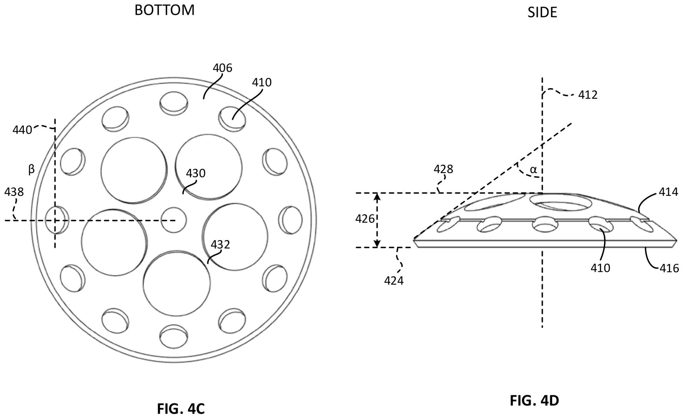

The circular outer frame 406 can have a first outer circumference 414 (e.g., upper outer circumference) near its top and a second outer circumference 416 (e.g., a lower outer circumference) near its base. The portion of the circular outer frame 406 extending from the second outer circumference 416 to the first outer circumference 414 can be considered a sidewall of the blade assembly 400. In this example, the second outer circumference 416 has a greater diameter than the first outer circumference 414, such that the sidewall has an inwardly curved or tapered profile in the direction from the second outer circumference 416 to the first outer circumference 414. The sidewall may be curved or tapered at an angle (e.g., shown as "α" in FIG. 4D) in the range of 15° to 55° relative to the central axis 412. But in other examples, the second outer circumference 416 may have the same diameter as the first outer circumference 414, such that the sidewall is parallel to the central axis 412. The sidewall can have an inner face and an outer face, where the outer face is opposite to the inner face.

As noted above, the radial structural supports 408 can be coupled to the circular outer frame 406. For example, the radial structural supports 408 can be coupled to the first outer circumference 414 (e.g., top end) of the circular outer frame 406. As shown in FIG. 4D, the central hub 102 may define in a first two-dimensional plane 428 that is substantially perpendicular to the central axis 412. The second outer circumference 416 of the circular outer frame 406 can define in a second two-dimensional plane 424 that is substantially perpendicular to the central axis 412. The first plane 428 can be substantially parallel to the second plane 424. The vertical distance 426 between the first plane 428 and the second plane 424 can define the overall thickness of the blade assembly 400. In some examples, this overall thickness (e.g., vertical distance) may be 15-35 mm.

As shown in FIG. 4B, the blade assembly 400 can have one or more gap regions 418 (e.g., openings) between the radial structural supports 408, the central hub 402, and the circular outer frame 406. The gap regions 418 can allow for cleaning fluid to easily circulate through and behind the blade assembly 400, so that the blade assembly 400 can be easily cleaned even if it remains inside the blender's container (e.g., attached to the motor shaft) during the cleaning process.

The circular outer frame 406 can include one or more apertures 410 (perforations). The apertures 410 can be positioned around the circumference of the circular outer frame 406. In this context, the apertures 410 can be said to extend through the sidewall of the blade assembly 400. In some examples, the apertures 410 may be evenly spaced apart (equidistant) around the circumference of the circular outer frame 406. The apertures 410 can be circular or oval in shape, which can improve the blade assembly's 400 ability to generate foam. Alternatively, the apertures 110 may be other shapes.

Because the circular outer frame 406 is curved toward the central axis 412, as discussed above, the apertures 410 can also be slanted or curved toward the central axis 412. For example, as shown in FIG. 4D, the bottom ends of the apertures 410 can be farther from the central axis 412 than the top ends of the apertures 410. In this arrangement, the apertures 410 are slanted or curved toward the central axis 412. As one particular example, if the circular outer frame 406 is slanted at an angle in the range of 15° to 45° toward the central axis 412, the apertures 410 can also be slanted at the same angle toward the central axis 412. On the other hand, if the circular outer frame 406 is not slanted toward or away from the central axis 412, as discussed above, the apertures 410 also may not slanted toward or away from the central axis 412. In this arrangement, the bottom ends and the top ends of the apertures 410 can be equidistant from the central axis 412.

The apertures 410 may or may not be slanted within the circular outer frame 406. For example, as shown in FIG. 4C, a radial axis 438 can extend outward from the central hub 402 to a center of an aperture 410. The aperture 410 may be oriented within the circular outer frame 406 at an angle that is substantially perpendicular to the radial axis 138. Alternatively, the aperture 410 may be slanted within the circular outer frame 406 at an oblique angle relative to the radial axis 438. The oblique angle may be an angle in the range of 15° to 50°. For instance, the aperture 410 may have an axis 440 that is substantially perpendicular to the radial axis 138 (e.g., shown as "β" in FIG. 4C) or slanted relative to the radial axis 438 at the oblique angle. The direction of the slant can be the same as the direction of rotation of the blade assembly 400, which can reduce turbulence. An example of this is shown in FIG. 4A, in which the direction of rotation is represented by a dotted arrow. The apertures 410 can be considered slanted in the direction of rotation when their leading edges (e.g., in the direction of rotation) are closer to the second outer circumference 416 of the circular outer frame 406 than their trailing edges. Conversely, the apertures 410 may be considered slanted away from the direction of rotation when their leading edges are closer to the first outer circumference 414 of the circular outer frame 406 than their trailing edges.

In some examples, the edges of the apertures 410 can be beveled rather than sharp. This can increase the shearing force on the liquid in the blender as it passes through the apertures, which can improve the foaming ability of the blade assembly 400. Other parts of the blade assembly 400 may also be beveled for safety reasons - e.g., to prevent accidental injuries.

The blade assembly 400 can be made of any suitable material or combination of materials. For example, the blade assembly 400 may include metal, plastic, or a combination thereof. In some instances, the blade assembly 400 may be manufactured as a single integral unit, for example via injection molding or 3D printing.

As the blade assembly 400 rotates in the liquid, the circular outer frame 406 can push the liquid outwardly against the inner wall of the blender's container. After forcefully impacting the inner wall of the container, the liquid can bounce back through the apertures 410 toward the central axis 412. The liquid can be sheared as it passes through the apertures 410 toward the central axis 412. This process can agitate and aerate the liquid to produce foam, such as cold foam.

In some examples, the blade assembly 400 may include a circumferential groove 442 or other integrated measurement indicator disposed on the circular outer frame 406 or another suitable location of the assembly. These measurement indicators can assist users in accurately dispensing liquid to a desired fill level within the blender container. For example, the circumferential groove 442 can be strategically positioned so that, when the blade assembly 400 is properly installed inside the blender container, the groove aligns with a liquid volume of 40 mL measured from the bottom of the container. This allows users to visually confirm that the proper volume of liquid has been added without needing separate measuring tools. Alternative examples may include multiple grooves or other visual or tactile markers, each corresponding to different target fill levels (e.g., 20 mL, 40 mL, 60 mL, etc.), thereby supporting a range of beverage or recipe requirements. The measurement indicators may be formed integrally with the blade assembly 400 during manufacture or may be applied by subsequent processing, and can be configured for compatibility with various container designs or volumes. The inclusion of such measurement features can enhance operational convenience and accuracy, reduce dependency on external measuring tools, and further streamline preparation processes in commercial settings.

The above description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, some examples described herein can be combined with other examples to yield further examples.

## Claims

1. A blade assembly for use in a blender, the blade assembly comprising:
an inner central hub, wherein a central axis of the blade assembly extends through a center of the inner central hub;
an outer circular frame, wherein the outer circular frame is tapered or curved in shape between a first two-dimensional plane and a second two-dimensional plane, wherein the first two-dimensional plane and the second two-dimensional plane are both substantially perpendicular to the central axis, and wherein the outer circular frame has apertures around a circumference of the outer circular frame; and
at least one radial structural support extending outwardly from the inner central hub to the outer circular frame, wherein the at least one radial structural support couples the inner central hub to the outer circular frame;
wherein gap regions are disposed in the blade assembly between the at least one radial structural support, the inner central hub, and the outer circular frame; and
wherein the blade assembly is configured for blending fluid in the blender.

2. The blade assembly of claim 1, wherein the outer circular frame includes a first outer circumference and a second outer circumference, the first outer circumference having a smaller diameter than the second outer circumference, preferably such that the circumference of the outer circular frame is tapered.

3. The blade assembly of claim 2, wherein the outer circular frame is tapered or curved.

4. The blade assembly of claim 2 or 3, wherein the apertures each have a first end that is closer to the central axis than a second end, such that the apertures are slanted relative to the central axis, preferably in addition to the apertures being slanted in a direction of rotation.

5. The blade assembly of any of claims 2 to 4, wherein the first outer circumference of the outer circular frame defines the first two-dimensional plane, the second outer circumference of the outer circular frame defines the second two-dimensional plane, the first two-dimensional plane is substantially parallel to the second two-dimensional plane, and a vertical distance between the first two-dimensional plane and the second two-dimensional plane defines at least part of a thickness of the blade assembly.

6. The blade assembly of claim 5, wherein a first face of the inner central hub lies in the first two-dimensional plane, and a second face of the inner central hub lies vertically above the second two-dimensional plane such that the second face is recessed relative to the second two-dimensional plane, the second face being opposite the first face.

7. The blade assembly of claim 5 or 6, wherein a first face of the at least one radial structural support lies in the first two-dimensional plane, and a second face of the at least one radial structural support lies vertically above the second two-dimensional plane such that the second face is recessed relative to the second two-dimensional plane, the second face being opposite the first face.

8. The blade assembly of any preceding claim, wherein the apertures are slanted in a direction of rotation at an angle of between 15 degrees and 50 degrees.

9. The blade assembly of any preceding claim, wherein the at least one radial structural support comprises multiple radial structural supports that are spaced equidistantly around the inner central hub.

10. The blade assembly of any preceding claim, wherein the apertures are spaced equidistantly around the circumference of the outer circular frame; and/or wherein the apertures are oval in shape.

11. The blade assembly of any preceding claim, wherein the inner central hub includes an aperture configured to securely attach the blade assembly to a motor shaft of the blender.

12. The blade assembly of any preceding claim, wherein the blade assembly is symmetrical around the central axis.

13. The blade assembly of any preceding claim, wherein a thickness of the outer circular frame is between 5 mm and 40 mm.

14. A method performed at a physical location, the method comprising:
receiving a blade assembly for a blender, the blade assembly including;
an inner central hub, wherein a central axis of the blade assembly extends through a center of the inner central hub;
an outer circular frame that is tapered or curved in shape between a first two-dimensional plane and a second two-dimensional plane, wherein the first two-dimensional plane and the second two-dimensional plane are both substantially perpendicular to the central axis, and wherein the outer circular frame has apertures around a circumference of the outer circular frame; and
at least one radial structural support extending outwardly from the inner central hub to the outer circular frame, wherein the at least one radial structural support couples the inner central hub to the outer circular frame;
receiving the blender;
coupling the blade assembly to a motor shaft inside a container of the blender;
adding a liquid to the container;
activating the blender, which causes the blade assembly to rotate in the liquid and generate a foam;
pouring the foam onto a beverage; and
providing the beverage to a recipient.

15. A system comprising:
a blender including a liquid container and a motor, the motor being operable to rotate a shaft inside the container; and
a blade assembly configured to be removably coupled to the shaft and rotate with the shaft inside the container, the blade assembly comprising:
an inner central hub, wherein a central axis of the blade assembly extends through a center of the inner central hub;
an outer circular frame that is tapered or curved in shape between a first two-dimensional plane and a second two-dimensional plane, wherein the first two-dimensional plane and the second two-dimensional plane are both substantially perpendicular to the central axis, and wherein the outer circular frame has apertures around a circumference of the outer circular frame; and
at least one radial structural support extending outwardly from the inner central hub to the outer circular frame, wherein the at least one radial structural support couples the inner central hub to the outer circular frame.
